# FASCICULE DE BREVET EUROPEEN

(11) **EP 1 873 401 B1**
(45) Date de publication et mention de la délivrance du brevet: **31.07.2019**
(21) Numéro de dépôt: 07075482.5
(22) Date de dépôt: 18.06.2007
(51) Int. Cl.: F04D 29/32, F01D 5/30, F04D 29/66

(54) **Rotor de turbomachine et turbomachine comportant un tel rotor**
Strömungsmaschinenrotor und Strömungsmaschine
Turbomachine rotor and turbomachine comprising such a rotor

(30) Priorité: 29.06.2006 FR 0605851
(43) Date de publication de la demande: 02.01.2008
(73) Titulaire: Safran Aircraft Engines, 75015 Paris (FR)
(72) Inventeur: Forgue, Jean-Bernard André, 89150 Montacher-Villegardin (FR); Reghezza, Patrick Jean-Louis, 77000 Vaux le Penil (FR); Timon, Alain, 77520 Paroy (FR)
(74) Mandataire: Gevers & Orès

(56) Documents cités:
- EP-A1- 1 400 698
- US-A- 4 033 705
- US-A- 4 344 740
- US-A- 5 259 728
- US-A- 5 282 720

## Description

La présente invention concerne un rotor de turbomachine, en particulier la fixation des aubes, notamment de soufflante, sur un disque de rotor.

Un rotor de turbomachine comporte classiquement, d'une part, un disque dont la périphérie comporte une pluralité de rainures sensiblement axiales et régulièrement réparties angulairement et, d'autre part, une pluralité d'aubes amovibles qui s'étendent radialement vers l'extérieur de la périphérie dudit disque, chaque aube comportant un pied d'aube logé dans l'une des rainures.

Lorsque le pied d'une aube est insérée dans une rainure, sa partie aval entre en contact avec un flasque aval solidaire du rotor et situé en aval de la rainure. Le pied d'aube prend appui sur le flasque aval qui sert de butée axiale. La rétention axiale est le plus souvent assurée par l'installation d'un flasque amont amovible, pouvant se présenter sous la forme d'un anneau de rétention. Lorsque ce flasque amont est fixé au disque, par exemple au moyen de boulons, il empêche la sortie de l'aube de la rainure du disque rotor. L'amont et l'aval se définissent par rapport au sens principal d'écoulement de l'air à travers le rotor. Un tel système de rétention axiale est décrit notamment dans le document EP1400698. Le flasque aval n'y est toutefois pas représenté.

Pour des raisons de montage, l'assemblage des aubes sur le disque comporte un jeu axial. Le positionnement axial aléatoire des aubes de soufflante à l'intérieur de ce jeu, déséquilibre le rotor et génère des vibrations lors du fonctionnement. Les vibrations sont d'autant plus importantes que les aubes de soufflante comportent des profils aérodynamiques à grande corde. En fonctionnement, les forces centrifuges considérables supportées par les aubes peuvent également entraîner un déplacement axial aléatoire des aubes à l'intérieur de ce jeu axial.

Pour empêcher tout déplacement axial des aubes lors du fonctionnement de la turbomachine, le flasque amont est équipé sur sa face aval de moyens élastiques, tels que des pions en élastomère, destinés à exercer sur les faces amonts des pieds d'aubes, après montage, des efforts suffisants pour maintenir lesdits pieds d'aube contre le flasque aval. Dans ce système, le flasque amont est constituée d'une seule pièce et possède une forme annulaire. Conformément aux documents US 5,259,728 A1 et US 6,457,042 A1, la rétention axiale peut également être assurée par une pluralité de petits flasques disposés entre les rainures.

Le système décrit par le document EP 1 400 698 A1 n'est cependant pas totalement satisfaisant. En effet, des phénomènes d'usure apparaissent sur le flasque aval. Ces usures sont provoquées par frottement des pieds d'aube sur le flasque aval et réduisent la durée de vie dudit flasque aval. Lorsque ce flasque aval est constitué, comme souvent, par la bride avant d'un tambour de compresseur, c'est-à-dire la pièce de forme sensiblement cylindrique supportant les aubes de compresseur en aval des aubes de soufflante, le risque encouru est la perte d'aube.

Ces usures apparaissent essentiellement lorsque la turbomachine est au repos et exposée au vent, et non lors du fonctionnement de la turbomachine, par exemple, lorsqu'un aéronef comportant une telle turbomachine est à l'arrêt sur une zone de stationnement. Le vent ambiant provoque généralement une rotation du rotor de la turbomachine qui fonctionne en moulinet (windmilling). Les aubes de rotor sont montées dans les rainures du disque avec, en outre, un jeu permettant un débattement radial, lequel disparaît lors du fonctionnement de la turbomachine en raison des forces centrifuges. On entend par débattement radial d'une aube, au sens de la présente invention, une rotation de faible amplitude de ladite aube dans la rainure du disque selon un axe sensiblement parallèle à l'axe du rotor. Au cours d'une rotation lente du rotor, entraîné par le vent, les aubes, en particulier de soufflante, subissent un débattement radial, par gravité, sous l'effet de leur propre poids, surtout lorsque celles-ci arrivent dans une position horizontale. L'effet combiné, d'une part, d'un débattement radial de l'aube et, d'autre part, d'un appui de celle-ci contre le flasque aval, en raison des efforts générées par les pions en élastomère en amont, est à l'origine des usures constatées.

Ces usures peuvent également apparaître lors de manipulations répétitives du rotor de turbomachine, par exemple, lors d'opérations de maintenance ou lors d'une rotation à très basse vitesse d'un rotor. D'une manière générale, ces usures apparaissent dans toutes les situations où le rotor est en rotation de sorte que le débattement radial d'une aube soit possible.

La présente invention a pour objectif de supprimer l'usure entre les aubes de rotor et le flasque aval.

L'invention concerne notamment un rotor de turbomachine selon la revendication 1.

De manière avantageuse, la butée élastique possède une forme apte à clipper la partie aval du pied d'aube. Idéalement, cette butée possède la forme d'un U comportant une base venant en appui contre la face aval du pied d'aube et deux branches venant en appui contre les faces latérales du pied d'aube. La base peut comporter sur sa face aval au moins un picot servant de crampon.

Cette butée élastique peut également clipper le flasque aval au lieu de la partie aval du pied d'aube.

L'invention concerne également une turbomachine comportant un tel rotor.

L'invention sera bien comprise et ses avantages apparaîtront mieux à la lecture de la description détaillée qui suit. La description se réfère aux figures annexées sur lesquels :
- la figure 1 est une vue schématique d'une turbomachine ;
- la figure 2 est une vue éclatée d'un rotor de turbomachine ;
- la figure 3 est une vue d'une partie aval d'un pied d'aube, selon l'art antérieur;
- la figure 4 est une vue d'une partie aval d'un pied d'aube prenant appui sur un flasque aval, selon l'art antérieur ;
- la figure 5 est une vue d'une partie aval d'un pied d'aube, selon l'invention ;
- la figure 6 est une vue d'une partie aval d'un pied d'aube prenant appui sur un flasque aval, selon l'invention ;
- la figure 7 est une vue d'une partie aval d'un pied d'aube prenant appui sur un flasque aval, selon un second mode de réalisation l'invention ; et
- la figure 8 est une vue d'une partie aval d'un pied d'aube prenant appui sur un flasque aval, selon un troisième mode de réalisation l'invention.

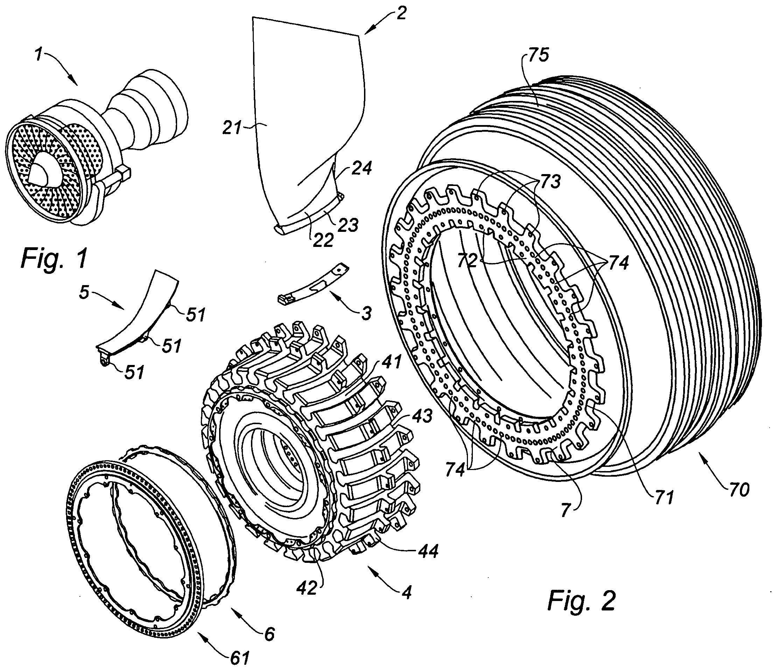

La figure 1 représente une turbomachine 1, de type turbosoufflante. Une turbomachine comporte classiquement un ensemble fixe constituant le stator et un ensemble rotatif constituant le rotor. Les points réguliers sur la figure 1 correspondent à l'emplacement du rotor objet de l'invention.

La figure 2 représente, en vue éclatée, les pièces principales constituant un rotor de turbomachine, plus particulièrement les pièces utiles au montage des aubes de soufflante 2, hormis les boulons.

Une aube 2 comporte un profil aérodynamique 21, en forme d'aile vrillée, et un pied d'aube 22. Le pied d'aube 22 est la partie inférieure de l'aube 2 qui n'interagit pas avec l'écoulement aérodynamique. Le plus souvent le profil aérodynamique 21 et le pied d'autre 22 sont délimités par une plate-forme amovible 5 ou solidaire de l'aube.

Lors de son montage sur un disque 4 de rotor, le pied d'aube 22 est insérée dans l'une des rainures 41 sensiblement axiales du disque 4 et vient en appui sur un flasque aval 7 disposée à l'extrémité aval 43 de la rainure 41. Le flasque aval 7, tel que représenté sur la figure 2, possède une forme annulaire et est solidaire d'un tambour de compresseur 70, de forme sensiblement cylindrique et comportant des rainures circonférentielles 75 destinées à accueillir des aubes de compresseur (non représentées). Le flasque aval 7 peut également être indépendant du tambour 70 et n'être constitué que d'une seule pièce de forme annulaire ou d'une pluralité de pièces annulaires indépendantes les unes des autres. Le flasque aval 7 comporte principalement un anneau 71 s'étendant radialement muni en périphéries intérieure et extérieure respectivement de brides de fixation intérieures 72 et de brides de fixation extérieures 73. Le flasque aval 7 et le disque 4 peuvent être solidarisés l'un à l'autre au moyen de boulons (non représentés). Les usures précitées sont principalement localisées sur l'anneau 71 entre chaque bride 72 ou 73 au niveau des surfaces locales référencées 74.

Des plates-formes 5 sont disposées entre deux aubes 2 successives afin de reconstituer une veine aérodynamique. Ces plates-formes 5 sont fixés par leurs brides 51 sur des brides 44 du disque 4. Il est également courant d'interposer une entretoise 3 entre les pieds d'aube 22 et le fond de la rainure 41 du disque 4.

Pour assurer la rétention axiale, un flasque amont 6 amovible est fixé à l'extrémité amont 42 des rainures. Le flasque amont 6, tel que représenté sur la figure 2, possède une forme annulaire. Il empêche le désengagement des aubes 2 par l'extrémité amont 42 de la rainure 41. Un second flasque 61 annulaire supplémentaire peut également être disposé en amont du flasque 6 et peut éventuellement être équipé sur sa face aval de moyens élastiques, par exemple des pions en élastomère tels que décrits dans le document EP1400698. Il se fixe sur le disque 4 par des boulons (non représentés).

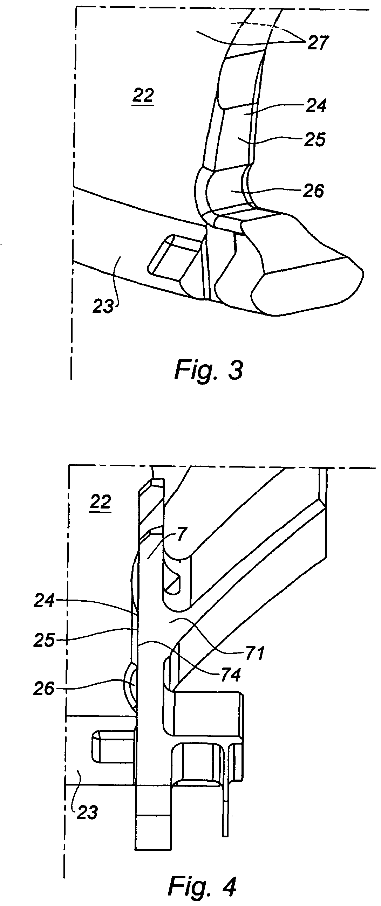

La figure 3 représente une partie aval inférieure d'un pied d'aube 22. Le pied d'aube 22 comporte à sa base un tenon 23 destiné à se loger dans une rainure 41 du disque 4. La partie aval 24 du pied d'aube 22 comporte une surface 25 et un évidement 26, lequel se situe entre la surface 25 et le tenon 23. La fonction initiale de cet évidement 26 est d'éviter les contraintes dans cette zone. Avantageusement, la butée axiale peut être logé dans cet évidement 26 pour maintenir un écart entre le pied d'aube 22 et le flasque aval 7.

Comme représentée sur la figure 4, la surface 25, sensiblement plane, du pied d'aube 22 vient en contact avec une surface 74 de l'anneau 71 du flasque aval 7. Ce contact est responsable de l'usure par frottement précité.

Pour réduire, voire supprimer, les usures, l'invention propose de modifier le rotor de turbomachine en interposant entre chaque aube 2 et le flasque aval 7, une butée élastique 8 destinée à maintenir un écart entre l'aube 2 et le flasque aval 7, au moins lorsque le rotor n'est pas en fonctionnement.

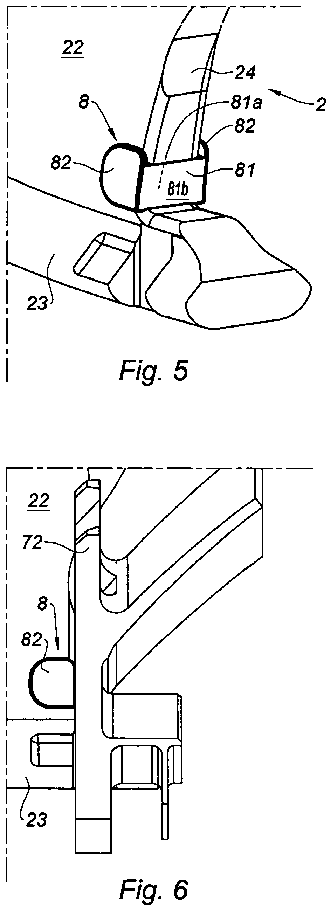

Les figures 5 et 6 correspondent respectivement aux figures 3 et 4 sur lesquelles figurent en outre la butée élastique 8 précitée. La butée élastique 8 possède une forme apte à clipper la partie aval 24 du pied d'aube 2, c'est-à-dire, pincer la partie aval 24 pour se fixer sur celle-ci. Pour ce faire, la butée élastique possède idéalement la forme d'un U comportant une base 81 venant en appui contre la partie aval 24 de l'aube 2 et deux branches 82 venant en appui sur les faces latérales 27 de l'aube 2. L'aptitude à clipper de la butée élastique 8 vise à faciliter le montage du rotor et de la turbomachine 1 dont certaines parties ne sont pas facilement accessibles.

Les branches 82 possèdent une forme sensiblement plate. La base 81 possède également une forme sensiblement plate et comporte une face amont 81a et une face aval 81b. Ces formes permettent avantageusement de limiter l'encombrement et le poids de la butée élastique 8, contraintes essentielles pour une application aéronautique. Ainsi, une telle butée élastique 8 peut être rapportée sur la plupart des rotors sans modifications conséquentes des autres pièces voisines.

Lorsque le débattement radial d'une aube 2 est possible, la butée élastique 8 maintient un écart entre le pied d'aube 22 et le flasque aval 7. Cet écart prévient le frottement propice à l'usure. Un écart approprié se situe entre 0,1 et 0,8 mm. Lorsque le rotor est en fonctionnement, c'est-à-dire quand les gaz sont mis pour la rotation de la turbomachine 1, les forces centrifuges empêchent le débattement radial des aubes 2 de rotor de sorte que le frottement de ces aubes 2 avec le flasque aval 7 n'existe plus. Dans ces conditions, il n'est pas nécessaire qu'un écart entre le pied d'aube 22 et le flasque aval 7 soit maintenu. La dureté de la butée élastique peut tenir compte de ces conditions.

La dureté de la butée élastique doit également permettre d'amortir le déplacement axial dû à la pression de l'aube 2 sur le flasque aval 7. Une dureté appropriée de la butée élastique 8 est obtenue pour une valeur comprise entre 40 et 80 shores D, de préférence entre 65 et 75 shores D. A titre d'exemple, la butée peut être réalisée en un premier matériau tel que de l'élastomère de polyuréthane d'une dureté de 71 à 73 shores D ou de la résine Peek ®.

Pour une meilleure adhérence de la butée élastique 8 sur le flasque aval 7, la face aval 81b peut être constituée d'un second matériau dont la dureté est inférieure à la dureté du premier matériau, de préférence une dureté comprise entre 50 et 70 shores A, par exemple de l'élastomère de silicone d'une dureté de 60 shores A.

Selon un premier mode de réalisation de l'invention, la face aval 81b de la butée élastique 8 est plane. Pour une meilleure adhérence de la butée élastique 8 sur le flasque aval 7, des aménagements structurels, détaillés dans les second et troisième modes de réalisation, peuvent être effectués

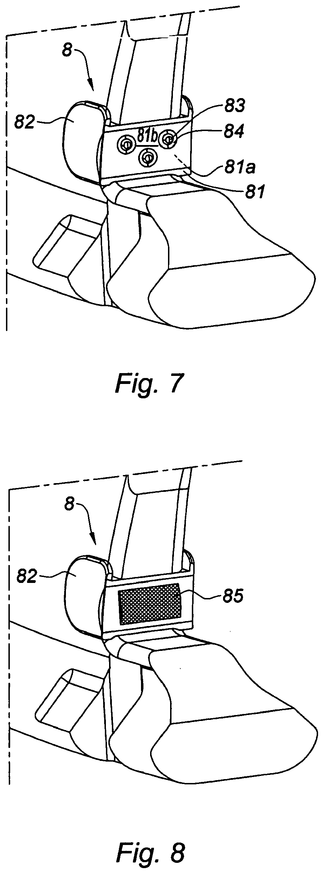

Selon un second mode de réalisation de l'invention, la butée élastique 8 peut comporter au moins un picot 83, de préférence trois, visibles sur la figure 7. Chaque picot 83, agissant comme un crampon, fait saillie à l'extérieur du plan défini par la face aval 81b de la base 81 et est situé dans un évidement circulaire 84 sur la face aval 81b de la base 81.

Selon un troisième mode de réalisation de l'invention, la butée élastique 8 peut comporter au moins une nervure 85 comme représentée sur la figure 8. D'autres formes peuvent également être envisagées pour obtenir une bonne adhésion de la butée élastique 8 sur le flasque aval 7.

L'invention convient aux rotors comportant des aubes de grandes dimensions, telles que les aubes de soufflante.

## Revendications

1. Rotor de turbomachine comportant :
• un disque (4) dont la périphérie comporte une pluralité de rainures (41),
• une pluralité d'aubes (2) amovibles, chaque aube (2) comportant un pied d'aube (22) présentant une base pourvue d'un tenon (23) destiné à être logé dans l'une des rainures (41), et
• un flasque aval (7), solidaire dudit disque (4) contre lequel chaque pied d'aube (22) vient en appui,
ledit rotor étant **caractérisé en ce qu'** il comporte, entre une partie avale (24) de chaque pied d'aube (22) et le flasque aval (7), une butée élastique (8) destinée à maintenir un écart entre le pied d'aube (22) et le flasque aval (7), et **en ce que** ladite partie avale (24) de chaque pied d'aube (22) se situe radialement à l'extérieur du tenon (23) de ladite base d'aube (22).

2. Rotor de turbomachine selon la revendication 1 **caractérisé en ce que** la butée élastique (8) possède une forme apte à clipper la partie aval (24) du pied d'aube (22).

3. Rotor de turbomachine selon la revendication 1 **caractérisé en ce que** la butée élastique (8) possède une forme apte à clipper le flasque aval (7).

4. Rotor de turbomachine selon la revendication 2 **caractérisé en ce que** la butée élastique (8) possède la forme d'un U comportant une base (81) venant en appui contre la partie aval (24) de l'aube et deux branches (82) venant en appui contre les faces latérales (27) du pied d'aube (22).

5. Rotor de turbomachine selon la revendication 4 **caractérisé en ce que** chaque branche (82) du U possède une forme sensiblement plate.

6. Rotor de turbomachine selon la revendication 4 ou 5 **caractérisé en ce que** la base (81) du U possède une forme sensiblement plate et comporte une face amont (81a) et une face aval (81b).

7. Rotor de turbomachine selon la revendication 6 **caractérisé en ce que** la base (81) comporte sur sa face aval (81 b) au moins un picot (83) servant de crampon.

8. Rotor de turbomachine selon la revendication 7 **caractérisé en ce que** la base (81) comporte sur sa face aval (81 b) trois picots (83).

9. Rotor de turbomachine selon la revendication 7 ou 8 **caractérisé en ce que** le picot (83) fait saillie à l'extérieur du plan défini par la face aval (81 b) de la base (81).

10. Rotor de turbomachine selon l'une des revendications 7 à 9 **caractérisé en ce que** le picot est situé dans un évidement circulaire (84) sur la face aval (81 b) de la base (81).

11. Rotor de turbomachine selon l'une des revendications 6 à 10 **caractérisé en ce que** la dureté de la face aval (81 b) de la base (81) est comprise entre 50 et 70 shores A.

12. Rotor de turbomachine selon la revendication 11 caractérisé en ce la face aval (81 b) de la base (81) a une dureté de 60 shores A.

13. Rotor de turbomachine selon l'une des revendications 6 à 12 **caractérisé en ce que** la face aval (81 b) de la base (81) est réalisé en élastomère de silicone.

14. Rotor de turbomachine selon l'une des revendications précédentes **caractérisé en ce que** la dureté de la butée élastique (8) est comprise entre 40 et 80 shores D.

15. Rotor de turbomachine selon la revendication 14 **caractérisé en ce que** la dureté de la butée élastique (8) est comprise entre 65 et 75 shores D.

16. Rotor de turbomachine selon la revendication 15 **caractérisé en ce que** la dureté de la butée élastique (8) est comprise entre 71 et 73 shores D.

17. Rotor de turbomachine selon l'une des revendications précédentes **caractérisé en ce que** la butée élastique (8) est réalisé en élastomère de polyuréthane.

18. Rotor de turbomachine selon l'une des revendications précédentes **caractérisé en ce que** l'aube (2) est une aube de soufflante.

19. Rotor de turbomachine selon l'une des revendications précédentes, **caractérisé en ce que** la partie aval (24- fait saillie axialement du pied de l'aube (22).

20. Turbomachine (1) comportant un rotor tel que défini dans les revendications précédentes.

## Patentansprüche

1. Strömungsmaschinenrotor, Folgendes umfassend:
- eine Scheibe (4), deren Peripherie eine Vielzahl von Nuten (41) umfasst,
- eine Vielzahl von abnehmbaren Schaufeln (2), wobei jede Schaufel (2) einen Schaufelfuß (22) umfasst, der eine Basis aufweist, die mit einem Fußzapfen (23) versehen ist, der dazu bestimmt ist, in eine der Nuten (41) eingeführt zu werden, und
- einen stromabwärtigen Flansch (7), der fest mit der Scheibe (4) verbunden ist, an den jeder Schaufelfuß (22) aufliegt,
wobei der Rotor **dadurch gekennzeichnet ist, dass** er zwischen einem stromabwärtigen Teil (24) eines jeden Schaufelfußes (22) und dem stromabwärtigen Flansch (7) einen elastischen Anschlag (8) umfasst, der dazu bestimmt ist, einen Abstand zwischen dem Schaufelfuß (22) und dem stromabwärtigen Flansch (7) zu erhalten, und dadurch, dass sich der stromabwärtige Teil (24) eines jeden Schaufelfußes (22) radial außerhalb des Fußzapfens (23) der Schaufelbasis (22) befindet.

2. Strömungsmaschinenrotor nach Anspruch 1, **dadurch gekennzeichnet, dass** der elastische Anschlag (8) eine Form besitzt, die imstande ist, den stromabwärtigen Teil (24) des Schaufelfußes (22) zu klippen.

3. Strömungsmaschinenrotor nach Anspruch 1, **dadurch gekennzeichnet, dass** der elastische Anschlag (8) eine Form besitzt, die imstande ist, den stromabwärtigen Flansch (7) zu klippen.

4. Strömungsmaschinenrotor nach Anspruch 2, **dadurch gekennzeichnet, dass** der elastische Anschlag (8) die Form eines U besitzt, das eine Basis (81) umfasst, die an dem stromabwärtigen Teil (24) der Schaufel aufliegt, und zwei Schenkel (82), die an den Seitenflächen (27) des Schaufelfußes (22) aufliegen.

5. Strömungsmaschinenrotor nach Anspruch 4, **dadurch gekennzeichnet, dass** jeder Schenkel (82) des U eine im Wesentlichen flache Form besitzt.

6. Strömungsmaschinenrotor nach Anspruch 4 oder 5, **dadurch gekennzeichnet, dass** die Basis (81) des U eine im Wesentlichen flache Form besitzt und eine stromaufwärtige Seite (81a) und eine stromabwärtige Seite (81b) aufweist.

7. Strömungsmaschinenrotor nach Anspruch 6, **dadurch gekennzeichnet, dass** die Basis (81) an ihrer stromabwärtigen Seite (81b) mindestens eine Noppe (83) umfasst, die als Stollen dient.

8. Strömungsmaschinenrotor nach Anspruch 7, **dadurch gekennzeichnet, dass** die Basis (81) an ihrer stromabwärtigen Seite (81b) drei Noppen (83) umfasst.

9. Strömungsmaschinenrotor nach Anspruch 7 oder 8, **dadurch gekennzeichnet, dass** die Noppe (83) nach außerhalb der Ebene, die durch die stromabwärtigen Seite (81b) der Basis (81) definiert wird, übersteht.

10. Strömungsmaschinenrotor nach Anspruch 7 bis 9, **dadurch gekennzeichnet, dass** sich die Noppe in einer kreisförmigen Ausnehmung (84) an der stromabwärtigen Seite (81b) der Basis (81) befindet.

11. Strömungsmaschinenrotor nach einem der Ansprüche 6 bis 10, **dadurch gekennzeichnet, dass** die Härte der stromabwärtigen Seite (81b) der Basis (81) zwischen 50 und 70 Shore A liegt.

12. Strömungsmaschinenrotor nach Anspruch 11, **dadurch gekennzeichnet, dass** die stromabwärtige Seite (81b) der Basis (81) eine Härte von 60 Shore A aufweist.

13. Strömungsmaschinenrotor nach einem der Ansprüche 6 bis 12, **dadurch gekennzeichnet, dass** die stromabwärtige Seite (81b) der Basis (81) aus einem Silikon-Elastomer realisiert ist.

14. Strömungsmaschinenrotor nach einem der vorstehenden Ansprüche, **dadurch gekennzeichnet, dass** die Härte des elastischen Anschlags (8) zwischen 40 und 80 Shore D liegt.

15. Strömungsmaschinenrotor nach Anspruch 14, **dadurch gekennzeichnet, dass** die Härte des elastischen Anschlags (8) zwischen 65 und 75 Shore D liegt.

16. Strömungsmaschinenrotor nach Anspruch 15, **dadurch gekennzeichnet, dass** die Härte des elastischen Anschlags (8) zwischen 71 und 73 Shore D liegt.

17. Strömungsmaschinenrotor nach einem der vorstehenden Ansprüche, **dadurch gekennzeichnet, dass** der elastische Anschlag (8) aus Polyurethan-Elastomer realisiert ist.

18. Strömungsmaschinenrotor nach einem der vorstehenden Ansprüche, **dadurch gekennzeichnet, dass** die Schaufel (2) eine Bläserschaufel ist.

19. Strömungsmaschinenrotor nach einem der vorstehenden Ansprüche, **dadurch gekennzeichnet, dass** der stromabwärtige Teil (24) axial aus dem Schaufelfuß (22) übersteht.

20. Strömungsmaschine (1), einen Rotor nach den vorstehenden Ansprüchen umfassend.

## Claims

1. Turbine engine rotor comprising:
• a disc (4) of which the periphery comprises a plurality of keyways (41),
• a plurality of removable blades (2), each blade (2) comprising a blade root (22) having a base provided with a tenon (23) intended to be housed in one of the keyways (41), and
• a downstream flange (7), secured to said disc (4) against which each blade root (22) bears,
said rotor being **characterised in that** it comprises, between a downstream portion (24) of each blade root (22) and the downstream flange (7), an elastic abutment (8) intended to maintain a separation between the blade root (22) and the downstream flange (7), and **in that** said downstream portion (24) of each blade root (22) is located radially outside of the tenon (23) of said blade base (22).

2. Turbine engine rotor according to claim 1, **characterised in that** the elastic abutment (8) has a shape capable of clipping the downstream portion (24) of the blade root (22).

3. Turbine engine rotor according to claim 1, **characterised in that** the elastic abutment (8) has a shape capable of clipping the downstream flange (7).

4. Turbine engine rotor according to claim 2, **characterised in that** the elastic abutment (8) has the shape of a U comprising a base (81) bearing against the downstream portion (24) of the blade and two branches (82) bearing against the side faces (27) of the blade root (22).

5. Turbine engine rotor according to claim 4, **characterised in that** each branch (82) of the U has a substantially flat shape.

6. Turbine engine rotor according to claim 4 or 5, **characterised in that** the base (81) of the U has a substantially flat shape and comprises an upstream face (81a) and a downstream face (81b).

7. Turbine engine rotor according to claim 6, **characterised in that** the base (81) comprises, on the downstream face (81b) thereof, at least one pin (83) used as a clamp.

8. Turbine engine rotor according to claim 7, **characterised in that** the base (81) comprises, on the downstream face (81b) thereof, three pins (83).

9. Turbine engine rotor according to claim 7 or 8, **characterised in that** the pin (83) protrudes outwards of the plane defined by the downstream face (81b) of the base (81).

10. Turbine engine rotor according to any of claims 7 to 9, **characterised in that** the pin is located in a circular recess (84) on the downstream face (81b) of the base (81).

11. Turbine engine rotor according to any of claims 6 to 10, **characterised in that** the hardness of the downstream face (81b) of the base (81) is between 50 and 70 shores A.

12. Turbine engine rotor according to claim 11, **characterised in that** the downstream face (81b) of the base (81) has a hardness of 60 shores A.

13. Turbine engine rotor according to any of claims 6 to 12, **characterised in that** the downstream face (81b) of the base (81) is made of silicone elastomer.

14. Turbine engine rotor according to any of the preceding claims, **characterised in that** the hardness of the elastic abutment (8) is between 40 and 80 shores D.

15. Turbine engine rotor according to claim 14, **characterised in that** the hardness of the elastic abutment (8) is between 65 and 75 shores D.

16. Turbine engine rotor according to claim 15, **characterised in that** the hardness of the elastic abutment (8) is between 71 and 73 shores D.

17. Turbine engine rotor according to any of the preceding claims, **characterised in that** the elastic abutment (8) is made of polyurethane elastomer.

18. Turbine engine rotor according to any of the preceding claims, **characterised in that** the blade (2) is a fan blade.

19. Turbine engine rotor according to any of the preceding claims, **characterised in that** the downstream portion (24) protrudes axially from the root of the blade (22).

20. Turbine engine (1) comprising a rotor such as defined in the preceding claims.
